Europäisches Patentamt

European Patent Office

Office européen des brevets

(11) Publication number: **0 134 488**

**A1**

(12) # EUROPEAN PATENT APPLICATION

(21) Application number: **84108112.8**

(22) Date of filing: **11.07.84**

(51) Int. Cl.⁴: **H 04 N 5/33**

(30) Priority: **19.08.83 US 524796**

(43) Date of publication of application:
**20.03.85 Bulletin 85/12**

(84) Designated Contracting States:
**DE FR GB**

(71) Applicant: **TEXAS INSTRUMENTS INCORPORATED**
**13500 North Central Expressway**
**Dallas Texas 75265(US)**

(72) Inventor: **Hopper, George S.**
**3217 Jomar**
**Plano Texas 75075(US)**

(74) Representative: **Leiser, Gottfried, Dipl.-Ing. et al,**
**Patentanwälte Prinz, Leiser, Bunke & Partner Ernsberger**
**Strasse 19**
**D-8000 München 60(DE)**

(54) **Thermal imaging system with row multiplexed/optically linked focal plane arrays.**

(57) A thermal imaging system having an infrared optical system (22) for focusing infrared energy emanating from a scene into a Dewar (30) containing a focal plane detector array (24), a silicon processor (48), and an array of LEDs (28). The silicon processor has an array of switches (66) interconnecting the focal plane detector array to an array of LED drivers (26) and X addressing shift registers for multiplexing by rows the focal plane detector array to the array of LEDs. The light from the array of LED's is optically linked to a display signal processor by a bundle of fiber optics (36). The display signal processor (38) produces signals representative of the infrared scene for display.

Fig.2

EP 0 134 488 A1

0134488

## THERMAL IMAGING SYSTEM WITH ROW MULTIPLEXED/
## OPTICALLY LINKED FOCAL PLANE ARRAYS

This invention relates to thermal imaging systems and more particularly to a system utilizing row multiplexed/optically linked focal plane arrays.

In the past thermal imaging systems have used infrared detector arrays of 180 detector elements or more. These detectors utilize materials such as mercury cadmium tellurium (MCT) which must be cooled by a cryogenic cooler to its operating temperature. The detector array is mounted in a vacuum module for attachment to the "cold finger" of the cryogenic refrigerator. The number of elements has been restricted by the electrical architecture of the array. That is, a two dimensional array of infrared sensitive detectors is used with each element electrically connected to a geometrically equivalent array of signal processing circuits. The resulting structure is referred to in common parlance as a "hybird" focal plane array.

If the array of detectors contains multiple elements along any particular scan line, then when the array is employed in a scanning system each element along the scan line produces an electrical representation of the infrared energy along this line; the signal from any element along this line will be displaced in time from any other element along this line. In order to ultimately produce an acceptable representation of the scene emanating the infrared (thermal) energy it is necessary to compensate for this time displacement at some point within the totality of the entire system signal processing circuitry. The compensation concept is to time delay the output of each detector along a scan line by the proper amount required for each detector, and then to electrically sum all such delayed signals. This concept is referred to in common parlance as "time delay and integration" or "TDI". The hybird focal plane array performs the TDI function in signal processing circuits to which the detector array is element by element interconnected. After the rows of scanning elements have been time delayed and integrated, the resulting column outputs are electrically multiplexed to form one or several electrical outputs to be brought out of the vacuum module of the cryogenic refrigerator for further external processing. Thus, the major problem attending increasing the number of detectors is the large amount of circuitry which must be fabricated within the geometrical constraints attending the detector array.

Another problem generated by the requirement for large quantities of complex circuits is the increased number of defective circuits generated by the bump bonding operation and the requirement that they operate at the required cryogenic temperature.

A further problem is that the probability of having numerous defective detectors is quite large and the TDI process is intolerant to a number of defective elements in any given row. This is true not only because such column output is derived by summing the outputs of every detector in the row, but because a shorted element will most probably saturate the processing circuitry associated with the column, and render that entire row of detectors useless.

Finally another problem is that the geometrical constraint on the integration cell circuitry inherently limits the charge storage capacity and therefor reduces the dynamic range of the system.

Accordingly it is an object of this invention to provide a thermal imaging system having increased image resolution.

Another object of the invention is to provide a thermal imaging system having increased overall infrared energy collection efficiency.

Still another object of the invention is to provide a thermal imaging receiver having a focal plane array detector with subtantial signal processing circuitry off the array.

Yet another object of the invention is to reduce substantially the circuitry on the focal plane array.

A further object of the invention is to provide a focal plane array whose signal output is substantially independent of faulty elements.

Still a further object of the invention is to increase substantially the dynamic range of the thermal imaging system.

Yet a further object of the invention is to provide a thermal imaging system which is inexpensive and which lends itself more readily to mass production techniques.

Briefly stated, the thermal imaging system of the present invention allows the time delay and integrate (TDI) function to be done off the focal plane array. Signals representative of the scene are obtained for the TDI function by multiplexing each row of detectors along the row, in a direction orthogonal to the scan direction, to a solid state driver. The driver drives a solid state light source, such as an LED, or a solid state light modulator - one for each row. The focal plane array, drivers and LED array are mounted in the vacuum module of the cryogenic refrigerator or DEWAR. The light output of each light source is optically coupled out of the vacuum module or DEWAR assembly, and relayed by fiber optics to electronics for required signal processing.

The novel features characteristic of the embodiments of the invention may best be understood by reference to the following detailed description when read in conjunction with the accompanying drawings, wherein:

Figure 1 is a block diagram of a prior art forward looking infrared (FLIR) receiver;

Figure 2 is a block diagram of the thermal imager constituting the present invention;

Figure 3 is an isometric view of the solid state arrangement of that portion of the thermal imager located within the detector DEWAR or vacuum module.

Figure 4 is a partial cross-sectional view of a detector/ silicon processor interconnect;

Figure 5 is a partial cross-sectional view of a detector/ silicon processor interconnect which provides an alternative to that of Figure 4;

Figure 6 is a schematic view partly in block form of a first embodiment of the solid state arrangement of Figure 3; and

Figure 7 is a schematic view partly in block form of a second embodiment of the solid state arrangement of Figure 3.

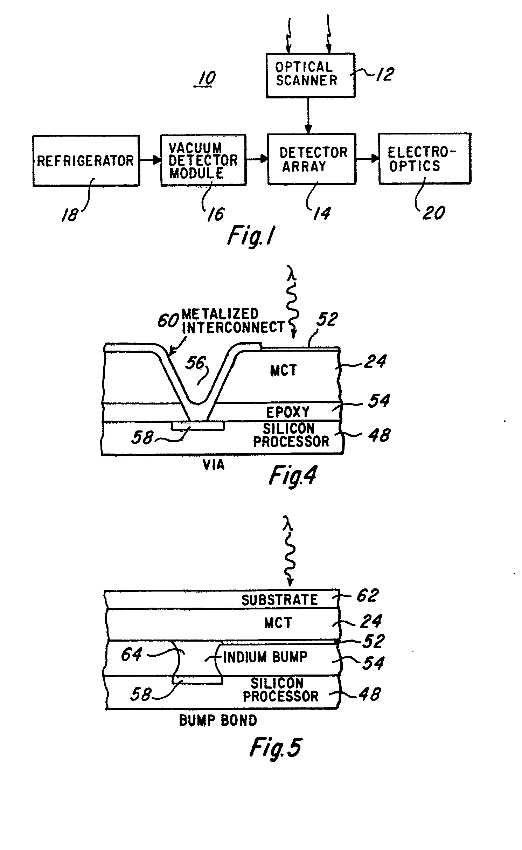

Referring now to Figure 1, prior art forward looking infrared devices 10 have included an optical scanner 12 for scanning infrared energy emanating from a scene onto a detector array 14. The detector array 14 has been mounted either on the end of a cold finger or in a vacuum module 16 cooled by a cryogenic refrigerator 18. The detector array has, for example, 180 elements producing electrical signals representative of the impinging infrared energy. Each of these elements has a lead passing through the vacuum module to a preamplifier of an electro optics circuit 20. The electro-optics circuit produces electrical working signals which are applied, for example, to light emitting diodes to produce a visible scene of the infrared image of the scene being scanned.

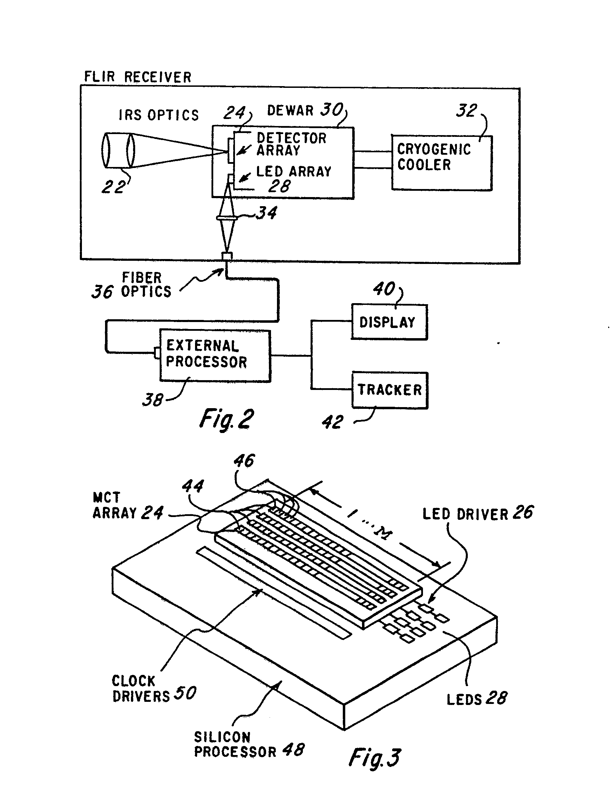

Referring now to Figure 2, the thermal imaging system of the present invention includes infrared optics 22, which may be, for example, a scanning system or a staring system for focusing thermal energy emanating from a scene onto a detector array 24. The detector array 24 is preferably a focal plane array which will be described hereinafter. The output of the detector array is connected to an array of light emitting diode (LED) drivers 26 (Fig. 3) for driving an array of LEDs 28 (Fig. 2). The detector array 24 and arrays of LED drivers 26 and LEDs 28 are mounted inside a DEWAR or vacuum module 30 which is cooled by a cryogenic refrigerator 32.

The array of LEDs 28 which, for example, may include one or more per row are optically connected through the DEWAR 30 and a focusing lens 34 to a corresponding plurality of fiber optics in fiber optics bundle 36. The fiber optics bundle 36 pipes the light energy from the array of LEDs to an external processor 38 which processes the light energy to working signals suitable for either a display means 40 or a target tracker 42. It will be appreciated that the light energy from the LED array may be in the invisible spectrum as well as in the visible spectrum. Further, as the required signal processing circuitry is outside the DEWAR, there is no geometrical or cryogenic environment limitation thereon and it may be implemented using any number of relatively standard digital and/or analog techniques.

Referring now to Figure 3, the detector array 24 is a focal plane array of infrared detectors, which are, for example, mercury cadmium tellurium (MCT) detectors. For clarity of the description, Figure 3 shows the detector array to consist of only four rows 44 of detector elements 46. Actually the array may consist of any number of rows 1 through N and any number of elements 1 through M. As previously mentioned, a preferred array includes at least 12 rows with each row having 240 detector elements (12 x 240 array).

The detector array 24 is affixed to a processor 48 which is, for example, a silicon chip processor. The silicon processor 48 includes a plurality of: switch means (not shown in Fig. 3), and LED drivers 26 for the LEDs 28. The LEDs 28 may be an array of gallium arsenide (GaAs) LEDs.

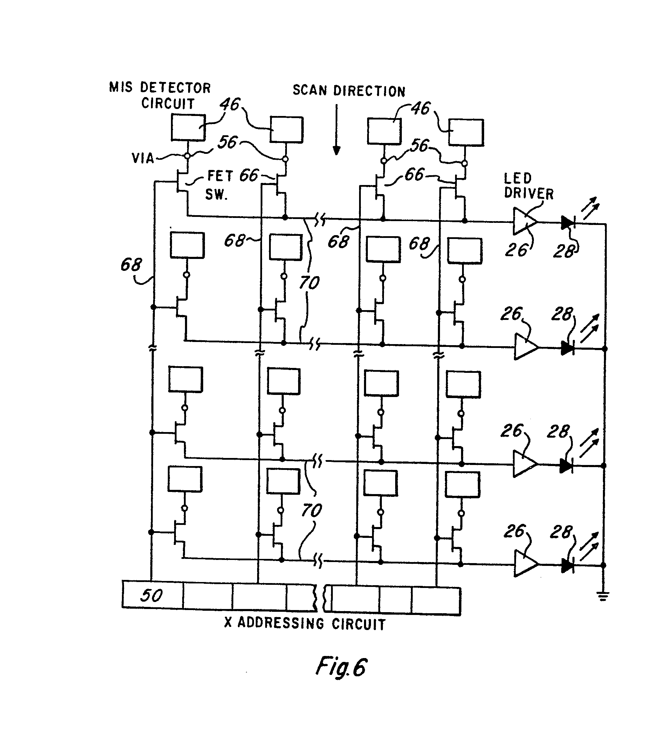

The detector array 24 may be formed from bulk MCT material (Fig. 4) having, in a first embodiment, on a first surface a layer 52 of infrared transparent materials such as, for example, a native oxide formed by anodizing the MCT surface, a zinc sulfide layer covering the native oxide and a nickel (Ni) layer covering the ZnS layer.

The side of the MCT opposite the layered surface 52 is epoxied to the chip of silicon processor 48 by a suitable nonconductive epoxy 54 such as, for example, Ablebond 642-1 sold by Ablestik Frozen Adhesives. Vias 56 are formed through the layer 52, MCT material 24, and epoxy 54 to bonding pads 58, and metalized to form a metalized interconnect 60.

In a second embodiment (Fig. 5) the bulk MCT material 24 is affixed to a substrate 62 which is transparent to infrared radiation. An example of a suitable substrate is cadmium tellurium (Cd Te). The layer 52 is formed on the surface opposite the substrate and selectively etched away for bump bonding material 64 such as, for example, Indium (In). The silicon processor 48 is oxidized to form a silicon oxide (SiO) surface and selectively etched to form bump bonding pads 58. The MCT material is then inverted and bumped bonded to the silicon processor 48.

Referring now to Figure 6, the array of MCT detector elements 46 are Metal Insulated Semiconductor (MIS) circuits connected through the vias 56 to a corresponding number of switches 66 which may be, for example, field effect transistors. The FET switches 66 have their source terminals connected through the vias 56 to MCT detector elements 46. The gates of each column of switches 66 are connected by leads 68 to clock drivers (shift registers) 50; while the drains of each row of switches 66 are connected by leads 70 to a plurality of LED drivers 26.

The LED drivers 26 correspond in number to the number of rows (one for each row) and are, for example, solid state amplifiers. The LED drivers 26 are connected to a corresponding number of LEDs. The LEDs may produce light in the invisible or visible spectrum. The arrangement of this embodiment is a hybird system because the array of MCT detector elements 24 are electrically connected to the switches 66 of the silicon processor 48 (Fig. 3). Those skilled in the art seeking a more detailed disclosure of the MIS detector circuits and array thereof are referred to United States patent applications Serial No. _____ (TI-9456) for an Infrared Imager and Serial No. _____ (TI-10,124) for an MIS Infrared Imager.

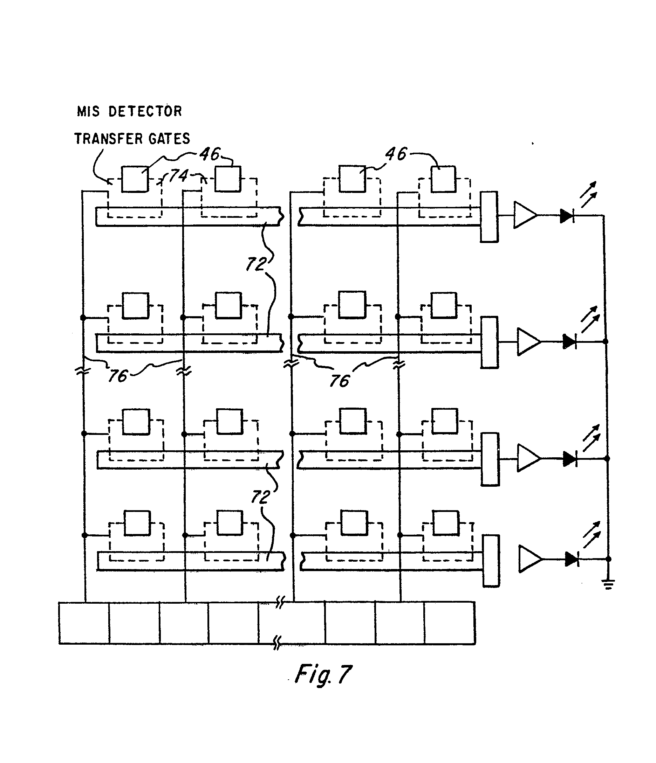

Referring now to Figure 7 for a description of a second embodiment which is a monolithic charge imaging matrix (CIM) comprising a slab of bulk n-type or p-type MCT material having a plurality of MCT detector element circuits 46 arranged in rows and columns. A p-n junction read line 72 is formed in a spaced relationship to the detector elements by ion implanting a p-type material into the n-type slab of MCT material or vice versa if the slab of MCT material is p-type. Transfer gates 74 separate the detector elements 46 from the read lines 72. The detector elements and transfer gates are MIS structures. Those persons skilled in the art desiring a more detailed description of the construction of this monolithic structure are referred to United States Patent Application Serial No. 141,498 (TI-7803) for an Infrared Matrix Using Transfer Gates. The transfer gates 74 are connected in columns by leads 76 to clock drivers (shift registers) 50 which comprise X addressing circuits. The clock drivers multiplex by rows the transfer gates 74 of the columns of detector elements through the plurality of LED drivers (amplifiers) 26 to the corresponding plurality of LEDs 28. The clock drivers 50 and LED drivers 26 are preferably solid state silicon devices; the LEDs may be, for example, Gallium Arsenide (GaAs) LEDs.

The light from the LED's Fig. 2 is focused by the lens 34 onto the bundle of fiber optics 36. It will be appreciated that if the bundle of fiber optics can be positioned close enough to the array of LEDs the focusing lens 34 can be omitted. For visible light or near visible the bundle of fiber optics may be drawn glass rods which are commercially available.

The fiber optics 36 are connected to an external signal processor 38 which receives the light from the LEDs, converts them to electrical signals by using, for example, avalanche photodiodes and utilizing the TDI technique processes the integrated signals into video signals for display on a Cathode Ray Tube 40 or into guidance signals for a device such as a target tracker 42, which does not require a display.

It will be readily apparent to one skilled in the art that although several embodiments of the invention have been described herein various modifications to the details of construction shown and described may be made without departing from the scope of this invention.

WHAT IS CLAIMED:

1.    A thermal imager comprising:

(a)    infrared optical means for focusing infrared energy emanating from a scene;

(b)    an infrared detector means including detector array, a processor, and a light emitting array means, the detector array optically positioned to receive the infrared energy emanating from the scene and producing electrical signals in response thereto, said processor for selectively multiplexing the electrical output of the detector array and the light emitting array means operatively connected to the multiplexed electrical output for generating light indicative thereof;

(c)    a  cooling  means  for cooling the infrared detector assembly to its operating temperature;

(d)    an  optical  linkage  means  in  operative association with the light emitting array for receiving light therefrom; and

(e)    a signal processing means operatively connected to the optical linkage means for producing signals representative of the infrared energy emanating from the scene for indicating preselected conditions.

2.    A thermal imager according to claim 1 wherein the detector array of infrared detector means is a focal plane detector array.

3.    A thermal imager according to claim 1 wherein the processor of the infrared detector means includes a switch means operatively connected to the detector array and light emitting array means and a multiplexer means for multiplexing the switches to selectively output the detector array signals to the light emitting array means.

4.    A thermal imager according to claim 1 wherein the light emitting array includes an array of light emitting diode drivers and a corresponding array of light emitting diodes.

5.    A thermal imager according to claim 1 wherein the detector array  is a Mercury Cadmium Tellurium focal plane detector array, the processor is a silicon-processor having formed therein a multiplexer, an array of FET switches and an array of LED drivers and the light emitting array is an array of Gallium Arsenide light emitting diodes, said detector array and light emitting diode array being fixed to the silicon processor.

6.    A thermal imager according to claim 1 wherein the detector cooling means includes a DEWAR having the infrared detector means mounted therein.

7.    A thermal imager according to claim 1 wherein the detector cooling  means includes a cryogen refrigerator and a vacuum module housing the infrared detector means.

8.    A thermal imager according to claim 1 wherein the optical linkage means includes a fiber optics bundle in operative associaion with the LED array for receiving light from the LED array.

9.    A thermal imager according to claim 8 further including a converging lens between the light emitting diode array and fiber optics bundle for focusing the light from the LED array onto the fiber optics bundle.

10.    A thermal imager according to claim 1 wherein light emitting diodes are operative in the visible wavelength range.

11. A thermal imager according to claim 1 wherein the light emitting diodes are operative in the invisible wavelength range.

12. A method of imaging thermal energy comprising the steps of:

       (a)   detecting infrared energy emanating from a scene using a focal plane detector array;

       (b)   multiplexing the output of the focal plane detector array to an array of light emitting diodes; and

       (c)   optically linking the light of the LED array to a signal process or for processing into signals indicative of the scene.

0134488

Fig.1

Fig.4

Fig.5

FLIR RECEIVER

IRS OPTICS    24    DEWAR 30         32

DETECTOR
ARRAY                CRYOGENIC
LED ARRAY            COOLER
22          28

34

FIBER
36 OPTICS

40

DISPLAY

EXTERNAL
PROCESSOR

TRACKER

38          Fig. 2         42

46

44

MCT
ARRAY 24                        LED DRIVER 26

1 ... M

CLOCK
DRIVERS 50                      LEDS 28

SILICON
PROCESSOR 48         Fig. 3

Fig. 6

MIS DETECTOR

TRANSFER GATES

Fig. 7

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int Cl. ⁵) |
|---|---|---|---|
| Y | US-A-4 338 627 (STAPLETON) <br> * Column 1, line 35 - column 3, line 28; figures 1,2 * | 1-7 | H 04 N 5/33 |
| A | | 2-12 | |
| Y | US-A-4 379 232 (HOPPER) <br> * Column 1, line 9 - column 2, line 21; column 3, line 32 - column 4, line 47; figures 1,2 * | 1-7 | |
| A | RADIO AND ELECTRONIC ENGINEER, vol. 52, no. 1, January 1982, London; D.B. WEBB "Thermal imaging via cooled detectors", pages 17-30 * <br> * Page 20, left column, last line - right column, last paragraph; figure 7 * | 5,7 | |

**TECHNICAL FIELDS SEARCHED (Int. Cl. ⁵)**

H 04 N 5/00
H 04 N 3/00

The present search report has been drawn up for all claims

| Place of search | Date of completion of the search | Examiner |
|---|---|---|
| BERLIN | 12-10-1984 | DUDLEY C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82